# EUROPÄISCHE PATENTSCHRIFT

(11) **EP 3 963 857 B1**
(45) Veröffentlichungstag und Bekanntmachung des Hinweises auf die Patenterteilung: **12.07.2023**
(21) Anmeldenummer: 20723848.6
(22) Anmeldetag: 01.05.2020
(51) Int. Cl.: H04B 10/27

(54) **AUFBAU EINES AUF GLASFASER BASIERENDEN HOCHSICHERHEITSNETZWERKS**
HIGHLY SECURE NETWORK AND METHOD FOR CONSTRUCTING A HIGHLY SECURE NETWORK
RÉSEAU DE HAUTE SÉCURITÉ ET PROCÉDÉ DE MISE EN PLACE D'UN RÉSEAU HAUTE SÉCURITÉ

(30) Priorität: 03.05.2019 DE 102019111553
(43) Veröffentlichungstag der Anmeldung: 09.03.2022
(73) Patentinhaber: OneFiber Interconnect Germany GmbH, 66606 St Wendel (DE)
(72) Erfinder: SCHMIDT, Frank, 66606 St Wendel (DE); KREMPER, Klaus, 55124 Mainz (DE); FECHT, Holger, 66123 Saarbrücken (DE)
(74) Vertreter: Betten & Resch
(86) Internationale Anmeldenummer: PCT/EP2020/062220
(87) Internationale Veröffentlichungsnummer: WO 2020/225163

(56) Entgegenhaltungen:
- US-B1- 7 444 506
- JORG SOMMER ET AL: "Ethernet - A Survey on its Fields of Application", IEEE COMMUNICATIONS SURVEYS AND TUTORIALS, INSTITUTE OF ELECTRICAL AND ELECTRONICS ENGINEERS, US, Bd. 12, Nr. 2, 1. April 2010 (2010-04-01), Seiten 263-284, XP011334497, ISSN: 1553-877X, DOI: 10.1109/SURV.2010.021110.00086
- AL-SALAMEH DANIEL Y ET AL: "Optical networking", BELL LABS TECHNICAL JOURNAL, WILEY, CA, US, Bd. 3, Nr. 1, 1. Januar 1998 (1998-01-01), Seiten 39-61, XP011627224, ISSN: 1089-7089, DOI: 10.1002/BLTJ.2092 [gefunden am 2014-03-15]
- FURDEK MARIJA ET AL: "Attack-Aware Dedicated Path Protection in Optical Networks", JOURNAL OF LIGHTWAVE TECHNOLOGY, IEEE, USA, Bd. 34, Nr. 4, 15. Februar 2016 (2016-02-15), Seiten 1050-1061, XP011598901, ISSN: 0733-8724, DOI: 10.1109/JLT.2015.2509161 [gefunden am 2016-02-12]

## Beschreibung

### GEBIET DER ERFINDUNG

Die vorliegende Erfindung betrifft ein Hochsicherheitsnetzwerk sowie ein Verfahren zu Aufbau eines Hochsicherheitsnetzwerks.

### HINTERGRUND DER ERFINDUNG

Die Verbreitung des Internets hat dazu geführt, dass inzwischen nicht nur die meisten Bewohner eines Industrielandes Zugang zum Internet haben, sondern dass auch immer mehr Geräte und Vorrichtungen mit dem Internet verbunden sind (Internet-of-Things). So sind inzwischen nicht nur Computer und Mobiltelefone, sondern zunehmend auch andere Gegenstände des täglichen Lebens wie etwa Haushaltsgeräte, Autos, etc. mit dem Internet verbunden. Daraus resultieren komplett neue Anwendungen, wie z.B. Autonomes Fahren usw.

Wesentliche sicherheitskritische Infrastrukturelemente wie etwa Strom-, Wasser- und Energieversorgungseinrichtungen sind an das Internet angebunden und verwenden teilweise zur Kommunikation das Internet.

Daneben ist auch die Kommunikationsinfrastruktur inzwischen zu einem signifikanten Teil vom Internet abhängig.

Ein Ausfall des Internets wäre für daher für sicherheitskritische Infrastruktureinrichtungen eines modernen Landes von hoher Relevanz und stellt eine signifikante Bedrohung dar.

Ähnlich verhält es sich mit dem Ausfall von Telekommunikationseinrichtungen, die Teil des Telekommunikationsnetzwerks eines Landes darstellen. Router und Switches sowie Basisstationen eines Mobilfunknetzes sind lediglich einige Teile eines Kommunikationsnetzwerks, deren Ausfall die Telekommunikationsinfrastruktur eines Landes und damit das Funktionieren der sicherheitskritischen Infrastruktur gefährden kann.

Die Gefahr eines Ausfalls eines Telekommunikationsnetzwerks besteht dabei nicht lediglich aufgrund möglicher technischer Fehlfunktionen, sondern auch aufgrund eines gezielten Angriffs beispielsweise durch Hacker, fremde Geheimdienste oder kriminelle Organisationen. Insbesondere ist es beispielsweise denkbar, dass in Bausteinen der Kommunikationsinfrastruktur ein versteckter Zugang (sogenannte Back Doors) vorgesehen ist, der es einem Angreifer ermöglicht, diese Komponenten mit Hilfe dieser Back Doors "abzuschalten" oder zu zerstören. Die Folgen eines solchen Angriffs könnten fatal sein. Darüber hinaus werden Kommunikationsinfrastrukturelemente immer mehr dazu genutzt, durch geheimdienstliche Tätigkeiten Wirtschaftsspionage zum Nachteil inländischer Unternehmen zu betreiben.

Es ist daher eine Aufgabe der vorliegenden Erfindung, ein Hochsicherheitsnetzwerk sowie ein Verfahren zu Aufbau eines Hochsicherheitsnetzwerks bereitzustellen, das diese Gefahren vermeidet oder minimiert.

Hochsicherheitsnetze zur Datenübertragung, die Glasfasern verwenden, sind aus dem Stand der Technik bekannt, wie zum Beispiel die Veröffentlichungen von Jörg Sommer et al:'Ehternet - A Survey on its Fields of Application', IEEE COMMUNICATIONS SURVEYS AND TUTORIALS, INSTITUTE OF ELECTRICAL AND ELECTRONICS ENGINEERS, US, Bd.12, Nr.2, 1.April 2010, Seiten 263 - 284, oder Daniel Y Al-Salameh et al:'Optical networking', BELL LABS TECHNICAL JOURNAL, WILEY, CA, US, Bd.3, Nr.1, 1.Januar 1998, Seiten 39 - 61.

### ZUSAMMENFASSUNG DER ERFINDUNG

Gemäß einem Ausführungsbeispiel der Erfindung umfasst ein Glasfaser-Hochsicherheitsnetzwerk zum Anschluss mehrerer sicherheitskritischer Rechner oder sonstiger Kommunikationsvorrichtungen eines Landes, deren Kommunikationsfähigkeit sichergestellt werden soll:
F asern des Glasfaserhochsicherheitsnetzes, die parallel zu Fasern eines Glasfaser-Grundnetzes verlegt sind, das aus Glasfaserkabeln gebildet wird, die entlang von Schienen eines Schienennetzes in zum Zeitpunkt der Verlegung der Glasfasern bereits vorhandenen Kabelführungssystemen des Schienennetzes verlegt wurden und die so ein entlang von Schienen verlegtes Glasfaser-Grundnetz bilden, das Ortslagen, innerhalb derer Schienen des Schienennetzes verlaufen, miteinander verbindet,
   wobei das Glasfaser-Grundnetz Teil eines öffentlich zugänglichen Telekommunikationsnetzes ist, und wobei ferner
   das Glasfaser-Hochsicherheitsnetzwerk nicht Teil eines öffentlich zugänglichen Telekommunikationsnetzes ist.

Die physikalische Trennung des Hochsicherheitsnetzwerks vom öffentlich zugänglichen Telekommunikationsnetz, das insbesondere auch das Internet umfasst, ermöglicht eine Abschirmung gegen Angriffe von außen, wobei die Verlegung von Teilen des Hochsicherheitsnetzwerks entlang der Kabelführungssysteme eines Schienennetzbetreibers dien technischen Aufwand zur Verlegung eines solchen Hochsicherheitsnetzwerks - verglichen mit sonstigen Verlegevarianten - drastisch reduziert.

Gemäß einem Ausführungsbeispiel ist eine Umschaltvorrichtung vorgesehen, um sicherheitskritischen Rechner oder sonstigen Kommunikationsvorrichtungen statt mit dem öffentlich zugänglichen Telekommunikationsnetz mit dem Hochsicherheitsnetzwerk zu verbinden.

Auf diese Weise lässt sich im Krisenfall die Kommunikation zwischen sicherheitskritischen Rechnern einfach aufrechterhalten.

Gemäß einem Ausführungsbeispiel ist die Umschaltvorrichtung über ein Umschaltsignal, vorzugsweise aus einem Network-Operations-Center (NOC - eine Zentrale Einheit für das ferngesteuerte Überwachen und Konfigurieren des Systems) ansteuerbar, das der Umschaltvorrichtung über das Glasfaser-Hochsicherheitsnetzwerk zugeführt wird.

Dies ermöglicht einerseits das Ansteuern der Umschaltvorrichtung aus der Ferne über das Hochsicherheitsnetzwerk.

Gemäß einem Ausführungsbeispiel verfügt die die Umschaltvorrichtung über einen oder mehrere Steuereingänge zum Steuern und/oder Ansteuern der Umschaltvorrichtung, die lediglich mit einem oder mehreren Kabeln des Glasfaser-Hochsicherheitsnetzwerks und nicht mit einem Kabel des Glasfaser-Grundnetzes verbunden sind.

Dies stellt sicher, dass kein unbefugtes Umschalten erfolgt, da die Umschaltung lediglich über das Hochsicherheitsnetzwerk erfolgen kann.

Gemäß einem Ausführungsbeispiel ist die Umschaltvorrichtung in unmittelbarer Nähe, vorzugsweise innerhalb eines Abstands von weniger als 30 Meter von dem sicherheitskritischen Rechner und/oder innerhalb desselben Raumes wie der sicherheitskritische Rechner angeordnet.

Dies ermöglicht es, die Trennung zwischen ungesichertem Netz und Hochsicherheitsnetzwerk bis sehr nahe vor den sicherheitskritischen Rechner aufrecht zu erhalten und erhöht damit die Sicherheit.

Gemäß einem Ausführungsbeispiel weist das Hochsicherheitsnetzwerk ferner auf:
eine Network Operations Center als zentrale Steuervorrichtung, die mit Umschaltvorrichtungen des Hochsicherheitsnetzwerks verbunden ist und von der aus zentral Umschaltvorrichtungen des Hochsicherheitsnetzwerks zum Umschalten der sicherheitskritischen Rechner auf das Hochsicherheitsnetzwerk ansteuerbar sind.

Auf diese Weise kann zentral und sehr schnell ein Umschalten vom ungesicherten Netzwerk auf das Hochsicherheitsnetzwerk vorgenommen werden.

Gemäß einem Ausführungsbeispiel bilden die parallel zum Glasfasergrundnetz in den Kabelführungssystemen des Schienenbetreibers verlegten Kabel des Glasfaser-Hochsicherheitsnetzwerksein ein Glasfaserhochsicherheitsgrundnetz, und ist ferner für die vom Glasfaserhochsicherheitsgrundnetz abzweigenden und zu einem sicherheitskritischen Rechner führenden Glasfaserkabel des Hochsicherheitsnetzwerks im Glasfaserhochsicherheitsgrundnetz jeweils ein separater Zugangspunkt vorgesehen, der nicht Teil des öffentlich zugänglichen Telekommunikationsnetzwerks ist.

Das Vorsehen eines separaten Zugangspunktes erhöht die Sicherheit des Glasfaser-Hochsicherheitsnetzwerks und verstärkt die Trennung von dem öffentlich zugänglichen Telekommunikationsnetzwerk.

Gemäß einem Ausführungsbeispiel sind die sicherheitskritischen Rechner oder sonstigen Kommunikationsvorrichtungen jeweils redundant vorhanden, wobei ferner
einer der beiden redundant vorhandenen Rechner oder sonstigen
Kommunikationsvorrichtungen mit einem öffentlich zugänglichen Kommunikationsnetz verbunden ist und
der andere der beiden redundant vorhandenen Rechner oder sonstigen Kommunikationsvorrichtungen mit dem Hochsicherheitsnetzwerk verbunden ist.

Die Redundanz der sicherheitskritischen Systeme ermöglicht zum einen die sofortige Verwendung der redundanten Systeme ohne "Umschalten", zum anderen stellt sie eine Absicherung gegen Angriffe auf die sicherheitskritischen Rechner dar, die stattfinden, solange diese noch mit dem öffentlich zugänglichen Telekommunikationsnetz verbunden sind.

Gemäß einem Ausführungsbeispiel weist die Verbindung zwischen einem ersten sicherheitskritischen Rechner oder sonstigen Kommunikationsvorrichtung und einem zweiten sicherheitskritischen Rechner oder sonstigen Kommunikationsvorrichtung auf:
einen ersten Glasfaserkabelabschnitt, der sich von dem ersten sicherheitskritischen Rechner oder sonstigen Kommunikationsvorrichtung bis zu einem Glasfaserkabel, das entlang von Schienen eines Schienennetzes verlegt ist, erstreckt;
einen zweiten Glasfaserkabelabschnitt, der entlang von Schienen eines Schienennetzes verlegt ist;
einen dritten Glasfaserkabelabschnitt, der sich von dem zweiten Glasfaserkabelabschnitt, der entlang von Schienen eines Schienennetzes verlegt ist, bis zu dem zweiten sicherheitskritischen Rechner oder sonstigen Kommunikationsvorrichtung erstreckt.

Der zweite Glasfaserkabelabschnitt lässt sich durch Verlegung in den Kabelführungssystemen des Schienennetzbetreibers besonders einfach verlegen. Der erste und dritte Glasfaserkabelabschnitt kann mit herkömmlichen Verlegemethoden verlegt werden.

Gemäß einem Ausführungsbeispiel weist ein Verfahren zum Verlegen eines Glasfaser-Hochsicherheitsnetzwerks zum Anschluss mehrerer sicherheitskritischer Rechner oder sonstiger Kommunikationsvorrichtungen eines Landes, deren Kommunikationsfähigkeit sichergestellt werden soll, auf:
Verlegen von Fasern des Glasfaserhochsicherheitsnetzes parallel zu Fasern eines Glasfaser-Grundnetzes, das aus Glasfaserkabeln gebildet wird, die entlang von Schienen eines Schienennetzes in zum Zeitpunkt der Verlegung der Glasfasern bereits vorhandenen Kabelführungssystemen des Schienennetzes verlegt wurden und die so ein entlang von Schienen verlegtes Glasfaser-Grundnetz bilden, das Ortslagen, innerhalb derer Schienen des Schienennetzes verlaufen, miteinander verbindet,
wobei das Glasfaser-Grundnetz Teil eines öffentlich zugänglichen Telekommunikationsnetzes ist, und wobei ferner
das Glasfaser-Hochsicherheitsnetzwerk nicht Teil eines öffentlich zugänglichen Telekommunikationsnetzes ist.

Dies ermöglicht eine besonders effiziente und ressourcensparende Verlegung eines Hochsicherheitsnetzwerks.

Gemäß einem Ausführungsbeispiel erfolgt das Verlegen von Fasern des Glasfaserhochsicherheitsnetzes zeitgleich mit der Verlegung von Fasern eines Glasfaser-Grundnetzes.

Auf diese Weise kann gleichzeitig mit dem Aufbau eines Glasfaser-Grundnetzes zur Versorgung der Bevölkerung mit beispielsweise Hochgeschwindigkeitszugängen zum Internet auch ein Hochsicherheitsnetzwerk verlegt werden.

### BESCHREIBUNG DER ZEICHNUNGEN

Fig. 1 zeigt schematisch ein Hochsicherheitsnetzwerk gemäß einem ersten Ausführungsbeispiel der Erfindung.
Fig. 2 zeigt schematisch einen vergrößerten Ausschnitt der Ortslage O1 aus Fig. 1.
Fig. 3 zeigt schematisch ein Hochsicherheitsnetzwerk gemäß einem weiteren Ausführungsbeispiel der Erfindung.

### DETAILLIERTE BESCHREIBUNG

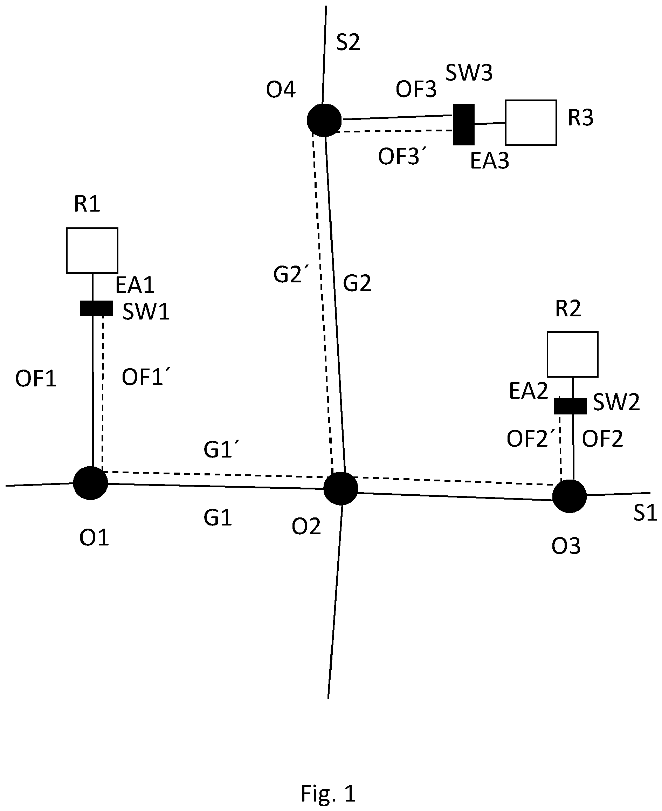

Ein Ausführungsbeispiel der Erfindung wird nachfolgend unter Bezugnahme auf Fig. 1 beschrieben.

Fig. 1 zeigt einen Ausschnitt aus einem Schienennetz eines Schienennetzbetreibers, wobei lediglich die Schienen S1 und S2 dargestellt sind. Ebenfalls dargestellt sind die Ortslagen O1, O2, O3 und O4. Die Schienen S1 erstrecken sich entlang der Ortslagen O1, O2 und O3 und kreuzen in der Ortslage O2 die Schienen S2. Entlang der Schienen S2 liegt ferner Ortslage O4.

Eine Ortslage kann dabei beispielsweise eine Stadt, eine Gemeinde, oder ein Dorf sein.

Entlang der Schienen S1 und S2 sind in den Kabelführungssystemen des Schienennetzes Glasfaserkabel verlegt, um ein Glasfaser-Grundnetz auszubilden. Auf diese Weise werden die Ortslagen O1 bis O4 an das Glasfaser-Grundnetz angeschlossen, wobei innerhalb der Ortslagen dann - beispielsweise in einem Bahnhof - ein Zugangspunkt vorgesehen ist, von dem sich weitere Glasfaserkabel in die jeweilige Ortslage erstrecken, um die Haushalte der Ortslage an das Glasfaser-Grundnetz anzuschließen. Diese bilden dann ein sogenanntes-Glasfaser-Ortslagenfestnetz.

Ein derartiges Glasfasernetz ist beispielsweise in der deutschen Patentanmeldung 10 2019 109 074.1, auf die hiermit Bezug genommen wird. In dieser Patentanmeldung wird beschrieben, wie durch Verlegung eines derartigen Netzes mit vergleichsweise geringem technischen Aufwand ein Anschluss von nahezu der gesamten Bevölkerung an ein Glasfaser-Hochgeschwindigkeitsnetz ermöglicht werden kann, indem die Kabelführungssysteme des Schienennetzbetreibers für die Verlegung der Glasfaserkabel verwendet werden. Dies vermeidet größere Aushubarbeiten für die Verlegung und spart somit Aufwand und technische Ressourcen für den Aufbau des Netzes.

Gemäß einem Ausführungsbeispiel kann jedoch wie nachfolgend beschrieben die Verlegung eines derartigen Netzes auch dazu dienen, ein weiteres, zu dem Glasfaser-Grundnetz zumindest teilweise paralleles Hochsicherheitsnetzwerk aufzubauen.

Wie in Fig. 1 gezeigt befindet sich in der Ortslage O1 - neben vielen anderen Kommunikationsvorrichtungen, die mit dem Glasfaser-Grundnetz verbunden sind - auch ein sicherheitskritischer Rechner R1 beispielsweise der Polizei, eines Wasserversorgungs- oder eines Energieversorgungsunternehmens, der im Krisenfall in der Lage sein sollte, mit weiteren sicherheitskritischen Rechnern R3 (in der Ortslage O4) und R2 (in der Ortslage O3) zu kommunizieren. Der Rechner R2 kann dabei beispielsweise ein Rechner einer staatlichen Behörde sein, der Rechner R3 beispielsweise der Rechner eines Flughafens. Ein Ausfall sowohl der Rechner R1 bis R3 wie auch deren Kommunikationsmöglichkeit untereinander sollte im Krisenfall vermieden werden.

Im "Normalfall" sind die Rechner R1 bis R3 wie folgt miteinander verbunden.

Entlang des Schienenstrangs S1 ist - in den Kabelführungssystemen des Schienennetzbetreibers - ein Glasfaserkabelstrang G1 verlegt. Entlang des Schienenstrangs S2 wiederum ist - in den Kabelführungssystemen des Schienennetzbetreibers - ein Glasfaserkabelstrang G2 verlegt. In der Ortslage O2 kreuzen sich die Stränge und sind mittels geeigneter Vorrichtungen (z. B. aktiven Komponenten, wie ROADM, DWDM usw.) miteinander verbunden. Die Stränge S1 und S2 sind dabei Teil des Glasfaser-Grundnetzes, das aus in den Kabelführungssystemen des Schienennetzbetreibers verlegten Kabeln besteht.

In der Ortslage O1 ist dann ein Zugangspunkt vorgesehen (z. B. vorzugsweise im Bahnhof von O1 oder in der Nähe der durch O1 verlaufenden Schienen), von dem aus sich dann eines oder mehrere weitere Kabel zur Bildung eines Ortsagenfestnetzes erstrecken. Ein Glasfaserkabel OF1 verbindet dabei den sicherheitskritischen Rechner R1 mit dem Zugangspunkt des Glasfaser-Grundnetzes. Dieses Kabel ist beispielsweise entlang der Straßen bis zum Standort des Rechners verlegt. Dem Rechner R1 unmittelbar vorgeschaltet ist dabei eine Umschaltvorrichtung SW1, die ein Umschalten zwischen dem ungesicherten Netz und dem Hochsicherheitsnetzwerk ermöglicht, und die über ein - vorzugsweise kurzes - End-Anschlusskabel EA1 mit dem oder den Kommunikationsanschlüssen des sicherheitskritischen Rechners R1 verbunden ist. Der Abstand zwischen der Umschaltvorrichtung SW1 und dem Rechner R1 bzw. die Länge des End-Anschlusskabels EA1 ist dabei vorzugsweise möglichst kurz, um die getrennten Netzwerke in getrennter Form möglichst nahe an den sicherheitskritischen Rechner heranzuführen. Vorzugsweise beträgt die Länge des End-Anschlusskabels weniger als 100 Meter, stärker bevorzugt weniger als 30 Meter, noch stärker bevorzugt weniger als 10 Meter, noch stärker bevorzugt weniger als 3 Meter. Gemäß einem bevorzugten Ausführungsbeispiel befindet sich die Umschaltvorrichtung SW1 im selben Raum wie der Rechner R1, vorzugsweise innerhalb desselben Racks.

Mittels der Umschaltvorrichtung SW1 kann dann der Rechner R1 statt über das Kabel OF1, das nicht zum Hochsicherheitsnetzwerk gehört, mit einem zum Hochsicherheitsnetzwerk gehörenden Kabel OF1' mit dem Hochsicherheitsnetzwerk und den daran angeschlossenen weiteren sicherheitskritischen Rechnern verbunden werden.

Analog zur zuvor beschriebenen Weise ist in der Ortslage O3 der sicherheitskritische Rechner R2 mittels des End-Anschlusskabels EA2 und des Glasfaserkabels OF2 an das Glasfaser-Grundnetz angeschlossen, wobei über die Umschaltvorrichtung SW2 dieser stattdessen mit dem Glasfaserkabel OF2' und dem Kabel G1' des Glasfaserhochsicherheitsnetzes verbunden werden kann. In der Ortslage O4 ist der sicherheitskritische Rechner R3 mittels des End-Anschlusskabels EA2 und des Glasfaserkabels OF3 an das Glasfaser-Grundnetz angeschlossen. Die Umschaltvorrichtung SW3 ermöglicht es, den Rechner R3 stattdessen mit dem Glasfaserkabel OF3' und dem Kabel G2' des Glasfaserhochsicherheitsnetzes zu verbinden.

Im "Normalfall", d. h. wenn keine Störungen oder kein Angriff auf das Netzwerk vorliegen, erfolgt die Kommunikation zwischen den sicherheitskritischen Rechnern R1 und R2 entlang der Kabel EA1-OF1 - G1 - OF2-EA2. Dabei sind die Rechner dann über das Glasfaserkabelsystem auch mit dem öffentlich zugänglichen Telekommunikationsnetz bzw. dem Internet verbunden, beispielsweise über eine Anbindung des Glasfaser-Grundnetzes an den Internet Exchange Point IXP.

Gemäß einem Ausführungsbeispiel ist jedoch parallel zu dem Kabel G1 des Glasfaser-Grundnetzes, das Teil eines öffentlich zugänglichen Telekommunikationsnetzes ist oder mit einem solchen bzw. dem Internet zumindest verbunden ist, ein weiteres Kabel G1' verlegt, das nicht Teil eines öffentlich zugänglichen Telekommunikationsnetzes ist. Dieses Kabel wurde - beispielsweise bei der Verlegung des Glasfaser-Grundnetzes - gleich mitverlegt, kann aber auch nachträglich verlegt worden sein - oder stellt ein Faserbündel des bereits verlegten Glasfaserkabels dar. Es bildet einen Teil eines Hochsicherheitsnetzwerks, das physikalisch von einem öffentlich zugänglichen Telekommunikationsnetz und dem Internet getrennt ist und dazu dienen soll, in ausfallsicherer Weise die Rechner R1, R2 und R3 zu verbinden.

Von dem Kabel G1' erstreckt sich hierzu, parallel zum Kabel OF1, das weitere Kabel OF1', das beispielsweise parallel zum Kabel OF1 verlegt ist, aber nicht - wie das Kabel OF1 - Teil eines öffentlich zugänglichen Telekommunikationsnetzes ist, sondern so wie das Kabel G1' Teil des Hochsicherheitsnetzwerks gemäß einem Ausführungsbeispiel der Erfindung ist. Dies bedeutet, dass es keine physikalische Verbindung zwischen dem Kabel OF1' und dem Kabel OF1 gibt, die einen Datenaustausch zwischen den beiden Kabeln ermöglicht. Es sei hier noch angemerkt, dass der Begriff "Kabel" in der vorliegenden Anmeldung so zu verstehen ist, dass er immer auch ein "Kabelbündel" oder "Glasfaserkabelbündel" umfassen kann. Eine physikalische Trennung zwischen beiden Netzen ist dabei genauso möglich.

Auf analoge Weise sind Kabel OF2'parallel zum Kabel OF2 und Kabel OF3' parallel zum Kabel OF3 verlegt, so dass auch hier keine physikalische Verbindung zwischen dem Kabel OF3' und dem Kabel OF3 gibt, die einen Datenaustausch zwischen den beiden Kabeln ermöglicht.

Wird nun aufgrund einer Fehlfunktion oder eines Angriffs von außen das öffentlich zugängliche Telekommunikationsnetz und damit die Verbindung OF1 - G1 - OF2 gestört oder unterbrochen, so steht als weitere, physikalisch von dem öffentlich zugänglichen Telekommunikationsnetz das Hochsicherheitsnetzwerk gemäß dem Ausführungsbeispiel der Erfindung zur Verfügung. Zum Aufrechterhalten oder Wiederherstellen der Verbindung kann dann der Rechner R1 durch Umschalten der Umschaltvorrichtung SW1 mit dem Kabel OF1' verbunden werden und der Rechner R2 durch Umschalten der Umschaltvorrichtung SW2 mit dem Kabel OF2'verbunden werden. Über den Pfad EA1-OF1'- G1'- OF2'-EA2 sind dann die sicherheitskritischen Rechner R1 und R2 mittels eines gegen Angriffe von außen abgeschirmten, da nicht mit dem öffentlichen Telekommunikationsnetz verbundenen, Hochsicherheitsnetzwerk verbunden. Analog kann auch der sicherheitskritische Rechner R3 durch Verbinden mit dem Kabel OF3' mit diesem Hochsicherheitsnetzwerk verbunden werden.

Das Verbinden der sicherheitskritischen Rechner mit dem separaten Hochsicherheitsnetzwerk kann dabei einfach durch ein "Patchen" geschehen oder durch im separaten Hochsicherheitsnetzwerk verbautes aktives Equipment, in Fig. 1 dargestellt als Umschaltvorrichtungen SW1, SW2 und SW3. Diese können beispielsweise in Form eines Schaltschranks oder einer sonstigen Vorrichtung ausgebildet sein, um die sicherheitskritischen Rechner oder sonstigen Kommunikationsvorrichtungen R1, R2 und R3 statt mit dem öffentlich zugänglichen Telekommunikationsnetz mit dem Hochsicherheitsnetzwerk zu verbinden.

In Fig. 1 ist ein derartiger Umschaltmechanismus schematisch dargestellt durch die Schaltvorrichtungen SW1, SW2 und SW3. Für den Fall, dass innerhalb des Netzwerks oder einzelner Komponenten eine Fehlfunktion festgestellt wird, kann dann über die Umschaltvorrichtung SW1 der Rechner R1 mit dem Kabel OF1', das zu dem Hochsicherheitsnetzwerk gehört, statt mit dem Kabel OF1 verbunden werden. Von dort geht dann der Kommunikationspfad weiter über die Kabel des Grundnetzes, also beispielsweise G1' und G2', über das Kabel OF3' zu dem Rechner R3, da auch die Umschaltvorrichtung SW3 den Rechner R3 mit dem Kabel OF3' als Teil des Hochsicherheitsnetzwerks verbunden hat. Auch der sicherheitskritische Rechner R2 ist über die Umschaltvorrichtung SW2 in diesem Fall mit dem Kabel OF2' und damit mit dem Hochsicherheitsnetzwerk verbunden.

Auf diese Weise kann dann, sofern aufgrund einer Fehlfunktion oder aufgrund eines Angriffs im mit dem öffentlich zugänglichen Telekommunikationsnetz oder dem Internet verbundenen Netzwerk eine sichere oder zuverlässige Kommunikation zwischen den Rechnern R1, R2 und R3 nicht möglich sein sollte, diese Kommunikation über die Pfade des Hochsicherheitsnetzwerks dennoch aufrecht erhalten werden.

Dabei ist festzuhalten, dass gemäß diesem Ausführungsbeispiel keine physikalische Verbindung zwischen dem Hochsicherheitsnetzwerk und dem Netzwerk, das mit dem öffentlichen Kommunikationsnetz bzw. dem Internet verbunden ist, besteht. Ein Datenaustausch zwischen diesen beiden Netzwerken ist nicht möglich und wird auch durch die Umschaltvorrichtungen SW1 bis SW3 nicht ermöglicht.

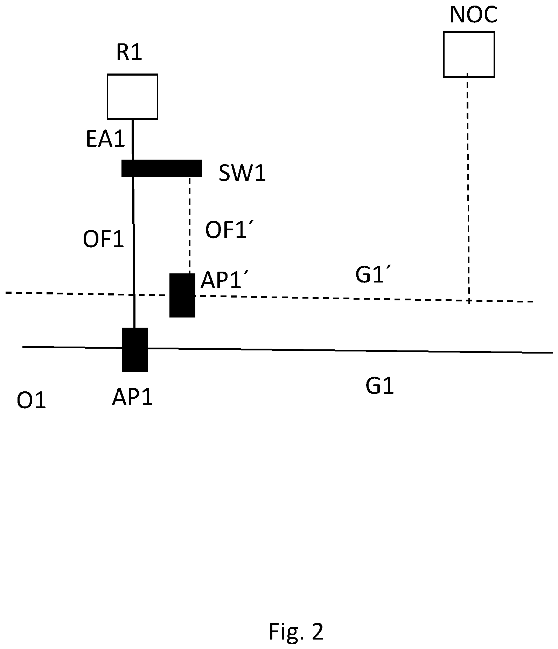

Unter Bezugnahme auf Fig. 2 wird nun eine Ausgestaltung der Umschaltvorrichtungen sowie deren Funktion innerhalb des Hochsicherheitsnetzwerks gemäß einem Ausführungsbeispiel näher erläutert. Fig. 2 zeigt dabei einen vergrößerten Ausschnitt der Ortslage O1 mit den diese durchlaufenden Kabeln G1 des Glasfaser-Grundnetzes und G1' des parallel dazu verlaufenden Glasfaserhochsicherheitsgrundnetzes, sowie die jeweiligen Zugangspunkte AP1 und AP1'.

Über den Zugangspunkt AP1, der beispielsweise als Switch, ROADM oder DWDM ausgebildet sein kann, ist der sicherheitskritische Rechner R1 mit dem Glasfasergrundnetz bzw. dessen Kabel G1 verbunden, das wiederum mit dem öffentlich zugänglichen Telekommunikationsnetzwerk verbunden ist. Über den - separaten - Zugangspunkt AP1', der ebenfalls als Switch, ROADM oder DWDM ausgebildet sein kann, hingegen ist das Kabel G1' als Teil des Hochsicherheitsnetzwerks bzw. des Glasfaserhochsicherheitsgrundnetzes über das Kabel OF1' mit der Umschaltvorrichtung SW1 verbunden. Im Falle einer Störung oder eines Angriffs bzw. einem "Krisenfall" kann dann mittels des Schalters SW1 der sicherheitskritische Rechner über das Kabel OF1' mit dem Hochsicherheitsnetzwerk verbunden werden.

Die Tatsache, dass der Zugangspunkt AP1' am Kabel G1' des Hochsicherheits-Glasfaser-Grundnetzes als separater Zugangspunkt, d. h. separat vom Zugangspunkt AP1 ausgebildet ist, sorgt für eine physikalische Trennung der Kabel des mit dem öffentlich zugänglichen Telekommunikationsnetzwerk verbundenen Glasfasergrundnetzes (in Fig. 1 dargestellt als G1 und G2) und den Glasfaserkabeln des Hochsicherheitsnetzwerks (in Fig. 1 dargestellt als G1' und G2'). Lediglich über die Umschaltvorrichtung, die sich vorzugsweise in unmittelbarer Nähe (z. B. innerhalb desselben Raumes) wie der Rechner R1 befindet, existiert eine -allerdings nur "scheinbare" - Verbindung zwischen dem Netzwerk, das mit dem öffentlich zugänglichen Telekommunikationsnetzwerk verbunden ist und dem Hochsicherheitsnetzwerk. Dies ist jedoch tatsächlich keine Verbindung, sondern vielmehr eine Trennung zwischen beiden Netzwerken, denn über die Umschaltvorrichtung SW1 ist der Rechner entweder mit dem "ungesicherten" Netzwerk, das mit dem öffentlich zugänglichen Telekommunikationsnetzwerk verbunden ist, verbunden, oder aber mit dem Hochsicherheitsnetzwerk. Eine Verbindung zwischen dem Hochsicherheitsnetzwerk und dem "ungesicherten" Netzwerk derart, dass Daten vom einen in das andere Netzwerk fließen können, besteht jedoch nicht, bzw. die Umschaltvorrichtung ist derart ausgestaltet, dass eine Verbindung zwischen dem ungesicherten Netzwerk und dem Hochsicherheitsnetzwerk, bei der ein Datenaustausch stattfinden könnte, verhindert wird.

Gemäß einem Ausführungsbeispiel kann die Umschaltvorrichtung aus einer aktiven Komponente bestehen, die über ein Steuerungssignal zwischen beiden Netzwerken umschaltet. Dabei ist die Umschaltvorrichtung in bevorzugter Weise derart ausgestaltet und angeschlossen, dass das Steuersignal die Umschaltvorrichtung lediglich über das Hochsicherheitsnetzwerk erreichen kann. Hierzu ist bei der Umschaltvorrichtung ein Steuerungseingang vorgesehen, der lediglich mit einem Kabel des Hochsicherheitsnetzwerks verbunden ist, und über den das Steuersignal der Umschaltvorrichtung zugeführt wird.

Gemäß einem Ausführungsbeispiel sind sämtliche Umschaltvorrichtungen, die jeweils einem sicherheitskritischen Rechner vorgeschaltet sind, ebenfalls nur über das Hochsicherheitsnetzwerk ansteuerbar.

Gemäß einem bevorzugten Ausführungsbeispiel ist ein eine Steuerzentrale oder "Network Operations Center" NOC vorgesehen, die an das Hochsicherheitsnetzwerk angeschlossen ist und über die zentral die Umschaltvorrichtungen für sämtliche mit dem Hochsicherheitsnetzwerk zu verbindenden sicherheitskritischen Rechner angesteuert werden. Auf diese Weise kann zentral mittels eines einzigen Umschaltvorgangs von einer Sekunde auf die andere vom ungesicherten Netzwerk auf das Hochsicherheitsnetzwerk umgeschaltet werden.

Nach erfolgtem Umschalten sind die sicherheitskritischen Rechner nur noch über das Hochsicherheitsnetzwerk verbunden. Sollte irgendwo innerhalb des ungesicherten Netzwerks aufgrund eines Angriffs oder einer Störung die Kommunikation nicht mehr möglich sein, so sind zumindest die sicherheitskritischen Rechner oder Kommunikationsvorrichtungen von beispielsweise Polizei, Regierung, Energie- und Wasserversorgern, etc. dennoch in der Lage, die Kommunikation untereinander aufrecht zu erhalten. Die schwerwiegendsten Wirkungen eines Angriffs auf die sicherheitskritische Infrastruktur eines Landes können so vermieden werden.

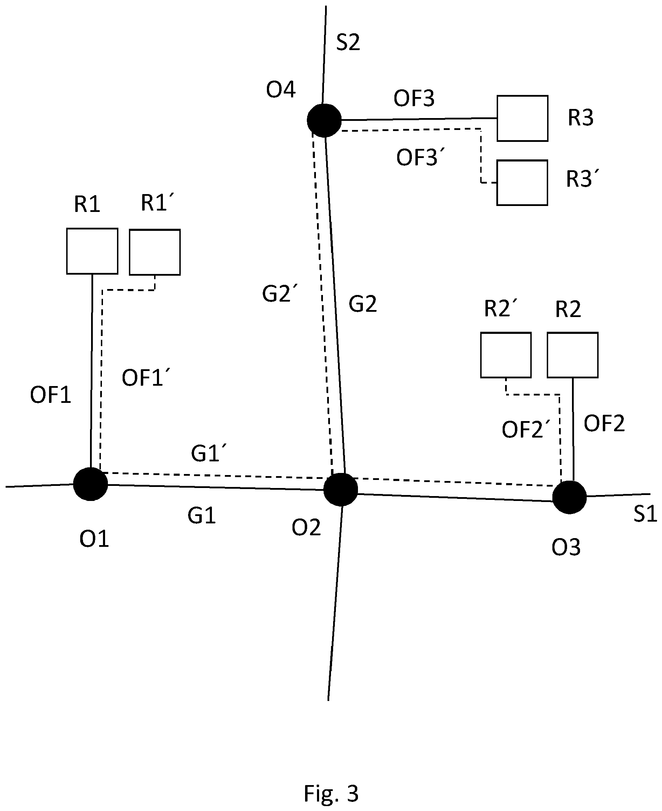

Gemäß einem weiteren Ausführungsbeispiel können die sicherheitskritischen Rechner oder sonstige sicherheitskritische Kommunikationsvorrichtungen redundant vorgesehen sein. Dies ist in Fig. 3 schematisch durch die redundanten Rechner R1', R2', und R3' dargestellt. Diese Rechner sind gemäß einem Ausführungsbeispiel standardmäßig mit dem Hochsicherheitsnetzwerk verbunden. Im Krisenfall oder für den Fall eines Angriffs auf das öffentlich zugängliche Telekommunikationsnetz können dann diese Rechner/Kommunikationsvorrichtungen zum Aufrechterhalten der sicherheitskritischen IT- und Kommunikationsinfrastruktur, beispielsweise zwischen Behörden und staatlichen Stellen, Versorgungsunternehmen wie Kraftwerken, Flughäfen, etc. verwendet werden. In diesem Fall ist eine Umschaltvorrichtung wie im Ausführungsbeispiel gemäß Fig. 1 nicht erforderlich. Vielmehr besteht bei diesem Ausführungsbeispiel eine vollkommene physikalische Trennung der Netze, bei der nicht einmal eine Umschaltvorrichtung zwischen den beiden Netzen existiert.

Gemeinsam ist beiden Ausführungsbeispielen, dass das Hochsicherheitsnetzwerk und das "ungesicherte Netzwerk", das mit dem Internet verbunden ist, "physikalisch getrennt" voneinander sind. Der Begriff "physikalisch getrennt" bedeutet dabei, dass es keine physikalische Verbindung zwischen den beiden Netzwerken gibt, insbesondere keine Verbindung, die einen Datenfluss vom ungesicherten Netzwerk in das Hochsicherheitsnetzwerk ermöglicht. Insbesondere ist das Hochsicherheitsnetzwerk zu keinem Zeitpunkt mit dem Internet verbunden.

Um Ausführungsbeispiel gemäß Fig. 3 existiert das Hochsicherheitsnetzwerk vollkommen separat vom ungesicherten Netzwerk. Es kann dabei mit den daran angeschlossenen Rechnern R1 bis R3 als vollkommen unabhängiges Netzwerk, unabhängig vom ungesicherten Netzwerk, vorgehalten werden. Gemäß einem Ausführungsbeispiel wird es über ein Steuerungssignal von einer zentralen Steuerungsstelle (NOC) aktiviert.

Der Ablauf von Anwendungen auf den sicherheitskritischen Rechnern R1 bis R3 kann auf diesen Rechnern selbst, oder er kann in einem Datencenter stattfinden, das als "Terminalserver" arbeitet und auf das die Rechner R1 bis R3 als "thin Clients" über das ungesicherte Netzwerk zugreifen. Im letzteren Fall ist gemäß einem Ausführungsbeispiel das Datencenter mit den darauf laufenden Anwendungen redundant vorgesehen und nur mit dem Hochsicherheitsnetzwerk verbunden. In diesem Ausführungsbeispiel greifen die redundant vorgesehenen Rechner R1', R2'und R3'über das Hochsicherheitsnetzwerk auf das Datencenter zu, auf dem die Anwendungen laufen, und kommunizieren so miteinander. Die Bereiche des Datencenters, die dem Hochsicherheitsnetzwerk zugeordnet sind, sind auch physikalisch von anderen Rechnereinheiten getrennt.

Entscheidend für die hohe Sicherheit der vorgeschlagenen Architektur ist wie mehrfach erwähnt die "physikalische Trennung" beider Netzwerke, so dass ein Datenfluss vom ungesicherten Netzwerk in das Hochsicherheitsnetzwerk verhindert wird.

Eventuell erforderliche "Updates" von Rechnern, die an das Hochsicherheitsnetzwerk angeschlossen sind, können gemäß einem Ausführungsbeispiel dabei zunächst über einen - für den Zeitraum des Herunterladens der Updates an das Internet angeschlossenen Rechner - heruntergeladen werden, der nach dem Herunterladen der Updates jedoch wieder von Internet getrennt wird und für einen gewissen Zeitraum "in Quarantäne" gehalten wird. In diesem Zeitraum werden die Updates dahingehend geprüft, ob sie eine Sicherheitsgefahr darstellen. Erst wenn ein gewisser Mindestzeitraum vergangen ist und eine Überprüfung der Updates keine Sicherheitsrisiken zutage gefördert hat, können die Updates vom Quarantänerechner, der dann dazu an das Hochsicherheitsnetzwerk angeschlossen wird, auf die sicherheitskritischen Rechner des Hochsicherheitsnetzwerks verteilt werden. Alternativ dazu können auch die Update-Daten von dem Quarantäne-Rechner auf einen Datenträger überspielt und von diesem dann jeweils an den sicherheitskritischen Rechnern R1', R2', und R3', "eingespielt" werden. Dabei besteht zu keinem Zeitpunkt eine physikalische Verbindung zwischen den sicherheitskritischen Rechnern des Hochsicherheitsnetzwerks und dem Internet Gemäß der bisher beschriebenen Ausführungsbeispiele kann somit unabhängig vom öffentlichen zugänglichen Telekommunikationsnetz eine Kommunikationsinfrastruktur bereitgestellt werden, die im Falle eines Angriffs oder eines Krisenfalls ein Mindestmaß an Kommunikation zwischen sicherheitskritischen Rechnern/Kommunikationsvorrichtungen aufrechterhält.

Hierzu sind, wie bereits zuvor beschrieben, die Kabel des Hochsicherheitsnetzwerks physikalisch von dem öffentlich zugänglichen Kommunikationsnetz getrennt (sei es über eine "Umschaltvorrichtung", die einen Datenfluss zwischen den Netzen verhindert, oder mittels "vollkommener" physikalischer Trennung ohne Vorsehen einer Umschaltvorrichtung zwischen beiden Netzwerken). Vorteilhaft ist ferner, wenn auch die weiteren aktiven Komponenten des Hochsicherheitsnetzwerks wie ROADMs, DWDMs, Switches und Router nach Möglichkeit sicherheitstechnisch überprüft sind und einer speziellen Zertifizierung unterliegen. Doch selbst bei Verwendung von prinzipiell angreifbaren Komponenten, die beispielsweise einen versteckt eingebautem "Kill-Switch" enthalten, ist es aufgrund der physikalischen Leitungstrennung und der fehlenden öffentlichen Zugänglichkeit des Hochsicherheitsnetzwerks für Angreifer schwierig, den "Kill-Switch" zu aktivieren.

Das Vorsehen eines separaten, physikalisch vom öffentlich zugänglichen Telekommunikationsnetz getrennten Hochsicherheitsnetzwerks, das insbesondere zu keinem Zeitpunkt mit dem Internet verbunden ist, ist gemäß Ausführungsbeispielen der Erfindung dann besonders vorteilhalt, wenn die Verlegung eines solchen Hochsicherheitsnetzwerks durch die Verlegung von Kabeln entlang der Kabelführungssysteme eines Schienennetzbetreibers (etwa der Deutschen Bahn) erfolgt und so enorme technische Ressourcen einspart. So kann beispielsweise auf Aushubarbeiten zur Kabelverlegung weitgehend verzichtet werden, allenfalls für die Verlegung der Ortslagen-Festnetzkabel OF1 'bis OF3' sind gegebenenfalls Aushubarbeiten erforderlich.

Besonders vorteilhaft ist es gemäß einem Ausführungsbeispiel der Erfindung ferner, wenn die Verlegung des Hochsicherheitsnetzwerks zeitgleich mit der Verlegung eines Glasfasernetzwerks wie beschrieben in der deutschen Patentanmeldung 10 2019 109 074.1 erfolgt. In diesem Fall kann mit geringem zusätzlichen Aufwand ein physikalisch vom öffentlich zugänglichen Kommunikationsnetz getrenntes Hochsicherheitsnetzwerk aufgebaut werden, das sicherheitskritische Rechner/Kommunikationsvorrichtungen miteinander verbindet.

## Patentansprüche

1. Glasfaser-Hochsicherheitsnetzwerk zum Anschluss mehrerer sicherheitskritischer Rechner oder sonstiger Kommunikationsvorrichtungen eines Landes, deren Kommunikationsfähigkeit sichergestellt werden soll, aufweisend:
Fasern des Glasfaserhochsicherheitsnetzwerks, die parallel zu Fasern eines Glasfaser-Grundnetzes verlegt sind, das aus Glasfaserkabeln gebildet wird, die entlang von Schienen eines Schienennetzes in zum Zeitpunkt der Verlegung der Glasfasern bereits vorhandenen Kabelführungssystemen des Schienennetzes verlegt wurden und die so ein entlang von Schienen verlegtes Glasfaser-Grundnetz bilden,
das Ortslagen, innerhalb derer Schienen des Schienennetzes verlaufen, miteinander verbindet,
wobei das Glasfaser-Grundnetz Teil eines öffentlich zugänglichen Telekommunikationsnetzes ist, und wobei ferner
das Glasfaser-Hochsicherheitsnetzwerk nicht Teil eines öffentlich zugänglichen Telekommunikationsnetzes ist.

2. Glasfaser-Hochsicherheitsnetzwerk nach Anspruch 1, wobei
eine Umschaltvorrichtung vorgesehen ist, um einen sicherheitskritischen Rechner oder sonstige Kommunikationsvorrichtung statt mit dem öffentlich zugänglichen Telekommunikationsnetz mit dem Hochsicherheitsnetzwerk zu verbinden.

3. Glasfaser-Hochsicherheitsnetzwerk nach Anspruch 2, wobei die Umschaltvorrichtung über ein Umschaltsignal ansteuerbar ist, das der Umschaltvorrichtung über das Glasfaser-Hochsicherheitsnetzwerk zugeführt wird.

4. Glasfaser-Hochsicherheitsnetzwerk nach Anspruch 2 oder 3, wobei die Umschaltvorrichtung über einen oder mehrere Steuereingänge verfügt zum Steuern und/oder Ansteuern der Umschaltvorrichtung verfügt, die lediglich mit einem oder mehreren Kabeln des Glasfaser-Hochsicherheitsnetzwerks und nicht mit einem Kabel des Glasfaser-Grundnetzes verbunden sind.

5. Glasfaser-Hochsicherheitsnetzwerk nach einem der Ansprüche 2 bis 4, wobei die Umschaltvorrichtung in unmittelbarer Nähe, vorzugsweise innerhalb eines Abstands von weniger als 30 Meter von dem sicherheitskritischen Rechner und/oder innerhalb desselben Raumes wie der sicherheitskritische Rechner angeordnet ist.

6. Glasfaser-Hochsicherheitsnetzwerk nach einem der Ansprüche 2 bis 5, ferner aufweisend:
eine Network Operations Center als zentrale Steuervorrichtung, die mit Umschaltvorrichtungen des Hochsicherheitsnetzwerks verbunden ist und von der aus zentral Umschaltvorrichtungen des Hochsicherheitsnetzwerks zum Umschalten der sicherheitskritischen Rechner auf das Hochsicherheitsnetzwerk ansteuerbar sind.

7. Glasfaser-Hochsicherheitsnetzwerk nach einem der Ansprüche 2 bis 6, wobei die parallel zum Glasfasergrundnetz in den Kabelführungssystemen des Schienenbetreibers verlegten Kabel des Glasfaser-Hochsicherheitsnetzwerksein Glasfaserhochsicherheitsgrundnetz bilden, und wobei ferner für die vom Glasfaserhochsicherheitsgrundnetz abzweigenden und zu einem sicherheitskritischen Rechner führenden Glasfaserkabel des Hochsicherheitsnetzwerks im Glasfaserhochsicherheitsgrundnetz jeweils ein separater Zugangspunkt vorgesehen ist, der nicht Teil des öffentlich zugänglichen Telekommunikationsnetzwerks ist.

8. Glasfaser-Hochsicherheitsnetzwerk nach einem der Ansprüche 1 bis 7, wobei sicherheitskritische Rechner oder sonstige Kommunikationsvorrichtungen redundant vorhanden sind, wobei ferner
einer der beiden redundant vorhandenen Rechner oder sonstigen Kommunikationsvorrichtungen mit einem öffentlich zugänglichen Kommunikationsnetz verbunden ist und
der andere der beiden redundant vorhandenen Rechner oder sonstigen Kommunikationsvorrichtungen mit dem Hochsicherheitsnetzwerk verbunden ist.

9. Glasfaser-Hochsicherheitsnetzwerk nach einem der Ansprüche 1 bis 8, wobei die Verbindung zwischen einem ersten sicherheitskritischen Rechner oder sonstigen Kommunikationsvorrichtung und einem zweiten sicherheitskritischen Rechner oder sonstigen Kommunikationsvorrichtung aufweist:
einen ersten Glasfaserkabelabschnitt, der sich von dem ersten sicherheitskritischen Rechner oder sonstigen Kommunikationsvorrichtung bis zu einem Glasfaserkabel, das entlang von Schienen eines Schienennetzes verlegt ist, erstreckt;
einen zweiten Glasfaserkabelabschnitt, der entlang von Schienen eines Schienennetzes verlegt ist;
einen dritten Glasfaserkabelabschnitt, der sich von dem zweiten Glasfaserkabelabschnitt, der entlang von Schienen eines Schienennetzes verlegt ist, bis zu dem zweiten sicherheitskritischen Rechner oder sonstigen Kommunikationsvorrichtung erstreckt.

10. Verfahren zum Verlegen eines Glasfaser-Hochsicherheitsnetzwerks, zum Anschluss mehrerer sicherheitskritischer Rechner oder sonstiger Kommunikationsvorrichtungen eines Landes, deren Kommunikationsfähigkeit sichergestellt werden soll, aufweisend: Verlegen von Fasern des Glasfaserhochsicherheitsnetzes parallel zu Fasern eines Glasfaser-Grundnetzes, das aus Glasfaserkabeln gebildet wird, die entlang von Schienen eines Schienennetzes in zum Zeitpunkt der Verlegung der Glasfasern bereits vorhandenen Kabelführungssystemen des Schienennetzes verlegt wurden und die so ein entlang von Schienen verlegtes Glasfaser-Grundnetz bilden, das Ortslagen, innerhalb derer Schienen des Schienennetzes verlaufen, miteinander verbindet,
wobei das Glasfaser-Grundnetz Teil eines öffentlich zugänglichen Telekommunikationsnetzes ist, und wobei ferner
das Glasfaser-Hochsicherheitsnetzwerk nicht Teil eines öffentlich zugänglichen Telekommunikationsnetzes ist.

11. Verfahren zum Verlegen eines Glasfaser-Hochsicherheitsnetzwerks nach Anspruch 10, wobei das Verlegen von Fasern des Glasfaserhochsicherheitsnetzes zeitgleich mit der Verlegung von Fasern eines Glasfaser-Grundnetzes erfolgt.

12. Verfahren zum Verlegen eines Glasfaser-Hochsicherheitsnetzwerks nach Anspruch 10 oder 11, ferner aufweisend die Merkmale eines der Ansprüche 1 bis 9.

## Claims

1. Fiber optic high-security network for connecting a plurality of security-critical computers or other communication devices of a country whose communication capability is to be ensured, comprising:
Fibers of the fiber optic high security network laid parallel to fibers of a fiber optic basic network formed of fiber optic cables laid along rails of a rail network in cable guide systems of the rail network already existing at the time of laying the fibers, thus forming a fiber optic base network laid along rails interconnecting localities within which rails of the rail network lie,
wherein the fiber optic base network is part of a publicly accessible telecommunications network, and wherein further
the fiber optic high security network is not part of a publicly accessible telecommunications network.

2. The fiber optic high security network of claim 1, wherein
a switching device is provided to connect a security critical computer or other communication device to the high security network instead of the publicly accessible telecommunications network.

3. The fiber optic high security network of claim 2, wherein the switching device is controllable by a switching signal supplied to the switching device via the fiber optic high security network.

4. The fiber optic high security network of claim 2 or 3, wherein the switching device has one or more control inputs for controlling and/or driving the switching device that are connected only to one or more cables of the fiber optic high security network and not to a cable of the fiber optic base network.

5. The fiber optic high security network of any one of claims 2 to 4, wherein the switching device is located in close proximity, preferably within a distance of less than 30 meters from the security critical computer and/or within the same room as the security critical computer.

6. The fiber optic high security network according to any one of claims 2 to 5, further comprising:
A Network Operations Center as a central control device, which is connected to switching devices of the high security network and from which switching devices of the high security network are centrally controllable for switching the security critical computers to the high security network.

7. The fiber optic high-security network according to any one of claims 2 to 6, wherein the cables of the fiber optic high-security network laid parallel to the fiber optic base network in the cable guide systems of the rail operator form a fiber optic high-security base network, and wherein further
a separate access point, which is not part of the publicly accessible telecommunications network, is provided in each case for the fiber optic cables of the high-security fiber optic network branching off from the high-security fiber optic base network and leading to a security-critical computer in the high-security fiber optic base network.

8. The fiber optic high-security network according to any one of claims 1 to 7, wherein
security-critical computers or other communication devices are redundantly provided, wherein further
one of the two redundantly provided computers or other communication devices is connected to a publicly accessible communication network, and
the other of the two redundantly present computers or other communication devices is connected to the high security network.

9. The fiber optic high security network according to any one of claims 1 to 8, wherein the connection between a first security critical computer or other communication device and a second security critical computer or other communication device comprises:
a first fiber optic cable section extending from the first security critical computer or other communication device to a fiber optic cable laid along rails of a rail network;
a second fiber optic cable section laid along rails of a rail network;
a third fiber optic cable section extending from the second fiber optic cable section laid along rails of a rail network to the second security critical computer or other communication device.

10. A method of laying a fiber optic high security network, for connecting a plurality of security critical computers or other communication devices of a country whose communication capability is to be ensured, comprising:
Laying fibers of the fiber optic high security network in parallel with fibers of a fiber optic base network formed of fiber optic cables laid along rails of a rail network in cable guide systems of the rail network already existing at the time of laying the fibers, thus forming a fiber optic base network laid along rails interconnecting localities within which rails of the rail network pass,
wherein the fiber optic backbone network is part of a publicly accessible telecommunications network, and wherein further
the fiber optic high security network is not part of a publicly accessible telecommunications network.

11. The method of laying a fiber optic high security network of claim 10, wherein laying fibers of the fiber optic high security network is performed concurrently with laying fibers of a fiber optic base network.

12. The method of laying an optical fiber high security network according to claim 10 or 11, further comprising the features of any one of claims 1 to 9.

## Revendications

1. Réseau de fibres optiques à haute sécurité pour connecter une pluralité d'ordinateurs ou d'autres dispositifs de communication d'un pays critiques en termes de sécurité dont la capacité de communication doit être assurée, comprenant :
des fibres du réseau de fibres optiques à haute sécurité posées parallèlement aux fibres d'un réseau de base à fibres optiques formé de câbles à fibres optiques posés le long des rails d'un réseau ferroviaire dans des systèmes de guidage de câbles du réseau ferroviaire déjà existants au moment de la pose des fibres, de façon à former ainsi un réseau de base en fibre optique posé le long des rails reliant des localités à l'intérieur desquelles se trouvent des rails du réseau ferroviaire,
le réseau de base à fibres optiques faisant partie d'un réseau de télécommunications accessible publiquement, et, en outre,
le réseau de fibres optiques à haute sécurité ne faisant pas partie d'un réseau de télécommunications accessible publiquement.

2. Réseau de fibres optiques à haute sécurité selon la revendication 1, dans lequel
un dispositif de commutation est fourni pour connecter un ordinateur ou un autre dispositif de communication critique en termes de sécurité au réseau de haute sécurité au lieu du réseau de télécommunications accessible publiquement.

3. Réseau de fibres optiques à haute sécurité selon la revendication 2, dans lequel le dispositif de commutation est apte à être commandé par un signal de commutation fourni au dispositif de commutation via le réseau de fibres optiques à haute sécurité.

4. Réseau de haute sécurité à fibre optique selon la revendication 2 ou la revendication 3, dans lequel le dispositif de commutation a une ou plusieurs entrées de commande pour commander et/ou piloter le dispositif de commutation qui sont connectées uniquement à un ou plusieurs câbles du réseau de haute sécurité à fibre optique et pas à un câble du réseau de base à fibres optiques.

5. Réseau de fibres optiques à haute sécurité selon l'une quelconque des revendications 2 à 4, dans lequel le dispositif de commutation est situé à proximité immédiate, de préférence à une distance inférieure à 30 mètres, de l'ordinateur critique en termes de sécurité et/ou dans la même pièce que le ordinateur critique en termes de sécurité.

6. Réseau de fibres optiques à haute sécurité selon l'une quelconque des revendications 2 à 5, comprenant en outre :
un centre d'exploitation de réseau en tant que dispositif de commande central, qui est connecté à des dispositifs de commutation du réseau à haute sécurité et à partir duquel des dispositifs de commutation du réseau à haute sécurité sont aptes à être commandés de manière centralisée pour commuter les ordinateurs critiques de sécurité vers le réseau à haute sécurité.

7. Réseau de fibres optiques à haute sécurité selon l'une quelconque des revendications 2 à 6, dans lequel les câbles du réseau de fibres optiques à haute sécurité posés parallèlement au réseau de base à fibres optiques dans les systèmes de guidage de câbles de l'opérateur ferroviaire forment un réseau de base de fibres optiques à haute sécurité, et dans lequel en outre un point d'accès séparé, qui ne fait pas partie du réseau de télécommunications accessible publiquement, est prévu dans chaque cas pour les câbles à fibres optiques du réseau à fibres optiques de haute sécurité partant du réseau de base à fibres optiques de haute sécurité et menant à un ordinateur critique en termes de sécurité du réseau de base de fibres optiques à haute sécurité.

8. Réseau de fibres optiques à haute sécurité selon l'une quelconque des revendications 1 à 7, dans lequel
des ordinateurs ou d'autres dispositifs de communication critiques en termes de sécurité sont prévus de manière redondante, dans lequel en outre
l'un des deux ordinateurs ou autres dispositifs de communication prévus de manière redondante est connecté à un réseau de communication accessible publiquement, et
l'autre des deux ordinateurs ou autres dispositifs de communication prévus de manière redondante est connecté au réseau de haute sécurité.

9. Réseau de fibres optiques à haute sécurité selon l'une quelconque des revendications 1 à 8, dans lequel la connexion entre un premier ordinateur ou autre dispositif de communication critique en termes de sécurité et un deuxième ordinateur ou autre dispositif de communication critique en termes de sécurité comprend :
une première section de câble à fibre optique s'étendant du premier ordinateur ou autre dispositif de communication critique en termes de sécurité à un câble à fibre optique posé le long des rails d'un réseau ferroviaire ;
une deuxième section de câble à fibres optiques posée le long des rails d'un réseau ferroviaire ;
une troisième section de câble à fibre optique s'étendant de la deuxième section de câble à fibre optique posée le long des rails d'un réseau ferroviaire jusqu'au deuxième ordinateur ou autre dispositif de communication critique en termes de sécurité.

10. Procédé de pose d'un réseau de fibres optiques à haute sécurité, pour connecter une pluralité d'ordinateurs ou d'autres dispositifs de communication critiques en termes de sécurité d'un pays dont la capacité de communication doit être assurée, comprenant :
le fait de poser des fibres du réseau de fibres optiques à haute sécurité en parallèle avec des fibres d'un réseau de base à fibres optiques formé de câbles à fibres optiques posés le long des rails d'un réseau ferroviaire dans des systèmes de guidage de câbles du réseau ferroviaire déjà existants au moment de la pose des fibres, de façon à former ainsi un réseau de base en fibres optiques posé le long de rails reliant des localités à l'intérieur desquelles passent des rails du réseau ferroviaire,
le réseau principal de fibres optiques faisant partie d'un réseau de télécommunications accessible publiquement, et, en outre,
le réseau de fibres optiques à haute sécurité ne faisant pas partie d'un réseau de télécommunications accessible publiquement.

11. Procédé de pose d'un réseau à fibres optiques haute sécurité selon la revendication 10, dans lequel la pose des fibres du réseau à fibres optiques haute sécurité est effectuée simultanément à la pose des fibres d'un réseau de base à fibres optiques.

12. Procédé de pose d'un réseau de fibres optiques à haute sécurité selon la revendication 10 ou la revendication 11, comprenant en outre les caractéristiques de l'une quelconque des revendications 1 à 9.
